# EUROPÄISCHE PATENTSCHRIFT

(11) **EP 1 730 220 B1**
(45) Veröffentlichungstag und Bekanntmachung des Hinweises auf die Patenterteilung: **20.10.2010**
(21) Anmeldenummer: 05715689.5
(22) Anmeldetag: 03.03.2005
(51) Int. Cl.: C08J 9/00

(54) **VERFAHREN ZUR HERSTELLUNG EINES VERNETZTEN PVC SCHAUMSTOFFKÖRPERS**
METHOD FOR PRODUCING A CROSS-LINKED PVC FOAM BODY
PROCEDE DE PRODUCTION D'UN CORPS EN MOUSSE PVC RETICULE

(30) Priorität: 23.03.2004 EP 04405178
(43) Veröffentlichungstag der Anmeldung: 13.12.2006
(73) Patentinhaber: 3A Technology & Management AG, 8212 Neuhausen am Rheinfall (CH)
(72) Erfinder: ELSER, Marcel, CH-5643 Sins (CH)
(86) Internationale Anmeldenummer: PCT/EP2005/002234
(87) Internationale Veröffentlichungsnummer: WO 2005/092958

(56) Entgegenhaltungen:
- EP-A- 0 074 907
- EP-A- 0 513 930
- DE-A- 2 105 906

## Beschreibung

Vorliegende Erfindung betrifft ein Verfahren zur Herstellung eines Schaumstoffkörpers aus einem PVC nach dem Oberbegriff des Anspruchs 1, sowie ein Schaumstoffkörper und die Verwendung desselbigen.

Polyvinylchlorid (PVC) wird häufig zur Herstellung von geschäumten Artikeln eingesetzt. Man unterscheidet hierbei zwischen den weichen und harten PVC-Schaumstoffen. Die weichen PVC-Schaumstoffe enthalten in der Regel Weichmacher. Sie finden beispielsweise Verwendung in Gymnastikmatten oder als Auftriebskörper.

Bei den harten PVC-Schaumstoffkörpern, welche bsp. als Schichteinlagen in Sandwichmaterialien verwendet werden, unterscheidet man zwischen linearen PVC-Schaumstoffen, welche unvernetzt sind, und den sogenannten vernetzten PVC-Schaumstoffen, welche in einer Vernetzungsreaktion einen harten aber auch spröden Schaumstoffkörper ergeben.

Es sind verschiedene Verfahren bekannt, vernetzte PVC-Hartschaumstoffe mit einer im wesentlichen geschlossenen Zellstruktur herzustellen. Ein gängiges Verfahren, welches schon seit Langem industrielle Anwendung findet, wurde von der französichen Firma Kleber Colombes entwickelt und in der Patentpublikation FR 1 366 979 beschrieben. Bei diesem Verfahren werden ein Polyisocyanat, ein ungesättigtes Säureanhydrid sowie ein Monomer wie etwa Stryrol als Komponenten des Netzwerks angegeben. Durch die Reaktion von Isocyanat mit Wasser und weiteren Ausgangskomponenten wird ein Polymernetzwerk ausgebildet, welches den PVC-Schaumstoffkörper versteift. Es wird davon ausgegangen, dass das PVC selbst ein Teil dieses Polymernetzwerkes ist.

Ein bewährtes Verfahren zur Herstellung solcher vernetzter PVC-Hartschaumstoffe beruht auf einem diskontinuierlich geführten, mindestens dreistufigen Prozess:
In einer ersten Prozessstufe wird aus wenigstens vier Ausgangskomponenten eine Ausgangsmischung in Form eines PVC-Plastisols hergestellt. Die erste Komponente und gleichzeitig Hauptbestandteil des Ausgangsgemisches ist PVC selbst, welches in Pulverform vorliegt. Die zweite Komponente ist ein Isocyanat oder Polyisocyanat. Die Dritte Komponente ist ein Säureanhydrid. Durch Reaktion der zweiten und dritten Komponente mit Wasser wird das besagte Netzwerk unter Abspaltung von gasförmigen CO₂ gebildet. Die vierte Komponente ist ein chemisches Treibmittel, welches bei der thermischen Zersetzung ein Gas freisetzt. In der Regel handelt es sich um Azo-bis-isobutyronitril oder Azodicarbonamid, wobei in diesem Fall das freigesetzte Gas N₂ ist.

Fallweise enthält das Ausgangsgemisch noch weitere Komponenten wie Stabilisatoren oder Lösungsmittel.

Wenigstens eine Komponente sollte in Flüssigform vorliegen, damit überhaupt ein homogenes Ausgangsgemisch hergestellt werden kann, welches erst die Herstellung eines Schaumstoffes mit gleichmässiger Zellstruktur erlaubt. In der Regel liegt das Isocyanat bzw. Polyisocyanat in Flüssigform vor und verleiht dem Ausgangsgemisch pastöse bis dünnflüssige Eigenschaften.

In einer zweiten Prozessstufe wird das Ausgangsgemisch in einer gasdichten Pressvorrichtung, bsp. in einem Tauchkanten-Presswerkzeug, bei einer Temperatur von 150-200°C und einem Druck von 5-500 bar aufgeschmolzen. Unter diesen Bedingungen wird das chemische Treibmittel des Ausgangsmaterials zersetzt, wobei das entstehende Gas Initial-Bläschen (auch embrionale Bläschen genannt) erzeugt. Gleichzeitig geliert das PVC unter Zunahme der Viskosität bis zur Verfestigung der Kunststoffmasse zu einem Formling.

In einer dritten Prozessstufe wird der verfestigte Formling in einem Expansionsofen unter Zugabe von Wasser oder Wasserdampf und unter Wärmeeinwirkung zu einem PVC-Hartschaumstoff vernetzt, wobei der Formling unter der Wirkung des vom chemischen Treibmittel erzeugten Gases sowie durch Freisetzung von CO₂ zu einem Hartschaumstoff expandiert.

Der Schaumstoffkörper kann in einem nachfolgenden Temperofen einer Nachhärtung unterzogen werden, in welcher das restliche Isocyanat weiter umgesetzt wird. Die Temperung erfolgt bevorzugt in feuchter Umgebung bei max. 70°C. Sie kann in Abhängigkeit der Plattendicke 2 bis 25 Tage dauern.

Die aus den bis anhin bekannten Ausgangskomponenten und mit dem herkömmlichen, dreistufigen Verfahren hergestellten PVC-Hartschaumstoffe weisen eine hohe Druckfestigkeit und Steifigkeit sowie eine grosse Stabilität auf und eignen sich daher besonders gut in strukturellen Anwendungen mit statischen Belastungen, z.B. in Verbundbauteilen, insbesondere als Kemschichten in Sandwich-Elementen. Im Gegensatz zu linearen, d.h. unvernetzen PVC-Schaumstoffen, sind vernetzte PVC-Hartschaumstoffe wesentlich härter.

Die genannten Schaumstoffe sind jedoch auch spröder und die Schlagfestigkeit bzw. Bruchfestigkeit solcher nach dem Stand der Technik hergestellten, vernetzten PVC-Hartschaumstoffe ist für gewisse Anwendungen mit dynamischen Belastungen nicht zufriedenstellend. So werden beispielsweise im Schiffs- und Marinebau PVC-Hartschaumstoffe in Verbundelementen für strukturelle Anwendungen eingesetzt. An solche Verbundelemente ist der Anspruch gerichtet, dass der Schaumstoffkern schadens-tolerant ist und bei einem Aufprallereignis möglichst nicht durch Strukturbruch (insbesondere Schubversagen im Kern) versagt, damit die durch eine Kollosion verursachten Schäden und insbesondere Folgeschäden in Grenzen gehalten werden können. Für solche Anwendungen eignen sich insbesondere lineare Kernwerkstoffe, welche eine hohe Bruchdeformation aufweisen.

Aus EP-A-0 074 907 ist ein Verfahren zur Herstellung von vernetzten PVC-Hartschaumkörpern bekannt. Das Ausgangsgemisch enthält 1,5 Gew.-% epoxidierte Verbindungen.

Aufgabe vorliegender Erfindung ist es daher, einen schadens-toleranten mit Isocyanat vernetzten PVC-Hartschaumstoff mit hoher Bruchdehnung vorzuschlagen, welcher sich nach dem oben beschriebenen diskontinuierlichen, dreistufigen Verfahren herstellen lässt.

Die Aufgabe wird durch die Merkmale des Anspruchs 1 gelöst. Die abhängigen Unteransprüche beschreiben bevorzugte Ausführungsvarianten.

Der Kern der Erfindung liegt darin, dass zu den an sich bekannten Ausgangskomponenten zusätzlich epoxidierte Verbindungen in Mindestmengen hinzugegeben werden. Epoxidierte Verbindungen, wie z.B. epoxidierte pflanzliche Öle, sind zwar als Costabilisatoren für PVC bekannt, welche in Mengen von bsp. 0.5 bis 1.5 Gew.-% des Ausgangsgemisches beigegeben werden. Die Beigabe epoxidierter Verbindungen in weitaus höheren Anteilen zur Steigerung der Schlagzähigkeit bzw. Bruchdehnung war jedoch bis anhin nicht bekannt.

Höhermolekulare epoxidierte Verbindungen, welche vorzugsweise in Flüssigform zugegeben werden, agieren als langkettige Netzwerkbildner. Im Gegenzug, d.h. zur Kompensation, wird in bevorzugter Ausführung der Erfindung der Anteil an Isocyanaten oder Polyisocyanaten im Ausgangsgemisch, welche die Ausbildung von kurzkettigen Netzwerken bewirken, im Vergleich zum Stand der Technik entsprechend gesenkt. Durch die Zugabe epoxidierter Verbindungen wird eine Reduktion der Vernetzung insgesamt, d.h. eine weitmaschigere Vernetzung des Schaumstoffes, erreicht, indem die epoxidierten Verbindungen im Laufe der Vernetzungsreaktion als langkettige Komponenten ins entstehende Netzwerk eingebunden werden.

Da in bevorzugter Ausführung auch die epoxidierten Verbindungen in Flüssigform vorliegen, kann trotz der Senkung des Anteils an Isocyanat unter Umständen auf den Einsatz von zusätzlichen Lösungsmitteln verzichtet werden.

Die Ausgangskomponenten zur Herstellung des erfinderischen, fliessfähigen Ausgangsgemisches umfassen insbesondere:
a) ein PVC in Pulverform;
b) ein Isocyanat als Vernetzungsmittel;
c) ein chemisches und teilweise zusätzliches physikalisches Treibmittel;
d) ein organisches Anhydrid, insbesondere ein aromatisches oder ein olefinisch ungesättigtes Anhydrid als weiteres Vernetzungsmittel, sowie
e) epoxidierte Verbindungen.

Das PVC liegt bevorzugt in einer Form vor, in welcher es sich möglichst gleichmässig in das Ausgangsgemisch einbringen lässt. Das PVC liegt daher vorteilhaft als rieselfähiger Feststoff, z.B. als Pulver, insbesondere als Feinstpulver vor.

Das PVC liegt beispielsweise in Anteilen von 20-95 Gew.-%, vorzugsweise 30-70 Gew.-%, vorteilhaft von 40- 60 Gew.-%, insbesondere von 45-55 Gew.-% bezogen auf das Ausgangsgemisch, vor.

Das Isocyanat kann bsp. ein Polyisocyanat oder ein Diisocyanat, wie 2,4- oder 2,6-Toluylen-diisocyanat (TDI), 4,4'-Diphenylmethan-diisocyanat (MDI, wie bsp. Desmodur® 1520 A20) oder Hexamethylen-diisocyanat (HDI bzw. HMDI), Isophorondiisocyanat (IPDI) ein Triisocyanat, wie das p,p',p"-Triphenylmethan-triisocyanat oder ein Polyisocyanat, wie das Polymethylen-polyphenylisocyanat oder Mischungen von zwei oder mehreren davon sein. Im Rahmen der Erfindung bevorzugt verwendete Polyisocyanate sind die aromatischen Diisocyanate.

Das Isocyanat ist einerseits zusammen mit dem Säureanhydrid wichtiger Bestandteil des Polymer-Netzwerkes. Andererseits wirkt das Isocyanat jedoch auch als Treibmittel, indem durch die Reaktion von Isocyanat mit H₂O oder der aus dem Anhydrid gebildeten Carbonsäure gasförmiges CO₂ freigesetzt wird, welches die Zellbildung im Schaumstoff unterstützt.

Das Isocyanat liegt bevorzugt in Flüssigform vor, wodurch die Herstellung eines fliessfähigen, insbesondere pastösen, Ausgangsgemischs erst möglich wird.

Der Anteil an Isocyanat wird durch den Einsatz epoxidierter Verbindungen gegenüber dem Stand der Technik im Schnitt vorzugsweise gesenkt und beträgt per 100 Anteile PVC (bezogen auf Gewichtsmasse) zweckmässig mehr als 20, vorzugsweise mehr als 25, insbesondere mehr als 30 sowie zweckmässig weniger als 65, vorzugsweise weniger als 60, vorteilhaft weniger als 55, insbesondere weniger als 50. In besonders bevorzugter Ausführung liegt der Anteil bei rund 35 bis 45.

Der Anteil an Isocyanat in Gew.-% des Ausgangsgemisches beträgt zweckmässig mehr als 0.5 vorzugsweise mehr als 5, vorteilhaft mehr als 10, insbesondere mehr als 15 sowie zweckmässig weniger als 50, vorzugsweise weniger als 40, insbesondere weniger als 30. In besonders bevorzugter Ausführung liegt der Anteil bei rund 20-30 Gew-%, insbesondere bei rund 17-23 Gew.-%.

Das Treibmittel (c) ist bevorzugt ein chemisches Treibmittel, insbesondere ein azotiertes Treibmittel. Bei azotierten Treibmitteln handelt es sich um Verbindungen, die sich irreversibel unter Wärmeeinwirkung zersetzen, wobei bei Temperaturen von 80-200°C Stickstoff (N₂) abgespalten wird. Derartige Verbindungen können bsp. Azoverbindungen, wie Azobisformamid, Azoisobuttersäuredinitril oder N-Nitrosoverbindungen, wie N,N'-Dinitrosoterephthalamid oder N,N'-Dinitrosopentamethylentetramin und Sulfonylhydrazide, wie Benzolsylfonylhydrazid oder Benzol-1,3-disulfonylhydrazid, sein.

Bevorzugt werden Azo-bis-isobutyronitrile (AIBN/AZDN, Genitron®), Azodicarbonamide (Unifoam AZ) oder Gemische davon, insbesondere ein Gemisch von Azo-bis-isobutyronitril und Azodicarbonamid, eingesetzt. Physikalische Treibmittel können bsp. Toluol, Aceton, Hexan oder Trichlorethylen sein.

Das Ausgangsgemisch kann als Ausgangskomponente (c) ein oder mehrere chemische und/oder physikalische Treibmittel enthalten.

Die Ausgangskomponente (c) wird, je nach angestrebter Rohdichte des Schaumstoffkörpers, in Mengen von insgesamt 0.1-12 Gew-% (Gewichts-Prozent), vorzugsweise 1-8 Gew.-%, insbesondere von 2-6 Gew.-% des Ausgangsgemisches zugegeben.

Das organische (Säure-) Anhydrid kann von einer ein- oder mehrbasischen Carbonsäure herrühren. Das organische Anhydrid kann bsp. Phthalsäureanhydrid (PSA, phthalic anhydride), Maleinsäureanhydrid (maleic anhydride), Bernsteinsäureanhydrid (succinic anhydride), Zimtsäureanhydrid, Citraconsäureanhydrid, Itaconsäureanhydrid, Trimellitsäure-Anhydrid (TMA, trimellitic anhydride), Hexahydrophthalsäure-anhydrid (HHPA, hexahydrophthalic anhydride), Methylhexahydrophthalsäureanhydrid (MHHPA, methylhexahydrophthalic anhydride), Cyclohexan-1,2-dicarbonsäureanhydrid (cyclohexane-1,2-dicarboxylic anhydride), *cis-*Cyclohexan-1,2-dicarbonsäureanhydrid (*cis-*cyclohexane-1,2-dicarboxylic anhydride), *trans*-Cyclohexan-1,2-dicarbonsäureanhydrid (*trans-*cyclohexane-1,2-dicarboxylic anhydride) oder ein Gemisch aus zwei oder mehreren der vorgenannten Anhydride sein.

Die Anhydride bilden gemeinsam mit dem Isocyanat ein Netzwerk aus, indem durch chemische Reaktionen unter Beteiligung der Anhydride, Wasser und Isocyanat Amide als Netzwerkbildner erzeugt werden.

Durch die Zugabe von Anhydriden wird daher ein hoher Grad an Vernetzung (Cross-linking) erreicht. Ferner erleichtern die beigemischten Anhydride dank ihrer hydrophilen Eigenschaften die Diffusion von Wasser in den Formling, wodurch die Reaktion zwischen Wasser und Isocyanat beschleunigt und durchgängig ausgelöst wird. Die Säure der Anhydride wiederum reagiert mit den epoxidierten Verbindungen, d.h. die Anydride dienen einerseits als Netzwerkbildner und gleichzeitig als Härter für die epoxidierten Verbindungen.

Da die epoxidierten Verbindungen nicht nur durch Amine sondern auch durch organische Säuren (acid curing agent), wie Phthalsäure- oder Maleinsäureanhydrid ausgehärtet werden, kommen den organischen Anydriden bei der Einbindung der epoxiderten Verbindungen in das Netzwerk eine entscheidende Bedeutung zu.

Der Anteil an organischem Anhydrid in Gew.-% des Ausgangsgemisches beträgt bsp. zwischen 0 und 30, insbesondere 2-20. In Anteilen per 100 Anteile PVC (bezogen auf Gewichtsmasse) sind dies bsp. 0-50, insbesondere 15-25.

Die epoxidierten Verbindungen liegen bevorzugt in fliessfähiger, insbesondere in flüssiger Form, vor. Geeignete epoxidierte Verbindungen sind bsp. epoxidierte Triglyceride, Alkylepoxystearate, -phthalate oder -tetrahydrophthalate. In bevorzugter Ausführung beinhalten die epoxidierten Verbindungen Epoxygruppen enthaltende, epoxidierte Öle, insbesondere epoxidierte pflanzliche oder tierische Öle, wie epoxidiertes Sojabohnenöl (EPSO), Tallöl oder Leinsamenöl (EPLO). Die Öle sind bevorzugt ungesättigte Öle. Die epoxidierten Verbindungen bestehen bevorzugt aus einem der vorgenannten Öle oder aus einem Gemisch aus mehreren der vorgenannten Öle.

Die epoxidierten Verbindungen können auch Epoxidharze, wie z.B. Araldit® beinhalten oder daraus bestehen. Die epoxidierten Verbindungen können ferner aus einem Gemisch von Epoxidharzen und epoxidierten Ölen der oben genannten Art bestehen.

Im Gegensatz zu Epoxidharzen zeichnen sich epoxidierte pflanzliche Öle dadurch aus, dass diese in der Regel Netzwerke geringerer Dichte ausbilden als Epoxidharze, weshalb epoxidierte pflanzliche Öle besonders bevorzugt eingesetzt werden. Da es sich bei den pflanzlichen Ölen um nachwachsende Rohstoffe handelt, ist damit aus ökologischer Sicht ein weiterer Vorteil gegeben.

Die epoxidierten Verbindungen dienen im übrigen nicht nur als langkettige Netzwerkbilder, wie oben erwähnt, sondern gleichzeitig auch als Stabilisatoren, so dass auf die Verwendung zusätzlicher Stabilisatoren verzichtet werden kann.

Der Anteil an epoxidierten Verbindungen per 100 Anteile PVC (bezogen auf Gewichtsmasse) beträgt zweckmässig mehr als 2, vorzugsweise mehr als 5, vorteilhaft mehr als 8, insbesondere mehr als 11 sowie zweckmässig weniger als 30, vorzugsweise weniger als 25, vorteilhaft weniger als 22, insbesondere weniger als 18. In besonders bevorzugter Ausführung liegt der Anteil bei rund 13 bis 17.

Der Anteil an epoxidierten Verbindungen in Gew.-% des Ausgangsgemisches beträgt vorzugsweise mehr als 3, insbesondere mehr als 5 sowie zweckmässig weniger als 30, vorzugsweise weniger als 15, insbesondere weniger als 11. In besonders bevorzugter Ausführung liegt der Anteil bei rund 6 bis 10 Gew-%.

Das Ausgangsgemisch kann fallweise weitere Additive, wie:
- Füllstoffe, z.B. Calciumcarbonat, feines SiO₂ oder Magnesiumoxid,
- Flammhemmende Stoffe, z.B. Antimontrioxid
- Stabilisatoren, z.B. Silikate, insbesondere ein Al-Silikat, Blei- (sulfat, phthalat, phosphit), Rhodiastab 50, Ca/Zn-stearat, Betadiaceton-Ca/Zn-stearat, Butylzinnmerkaptide / -carboxylate,
- Lösungsmittel, wie halogenierte Alkane, Toluol, Aceton, Hexan, Cyclohexanol, Tetrapropylbenzol, Trichlorethylen oder ein Gemisch der vorgenannten Lösungsmittel, sowie
- Farbstoffe oder Pigmente,
enthalten.

Ferner kann das Ausgangsgemisch copolymerisierbare bzw. polymerisierbare Verbindungen, wie Vinyliden- und Vinylmonomere, z.B. Styrol, Acrylnitril, Vinylacetat, Acrylate und Methacrylate von gesättigten primären Alkoholen mit bis zu 4 C-Atomen, wie Methylmethacrylat, enthalten.

Da die beigemischten epoxidierten Verbindungen bereits die Wirkung als Stabilisatoren haben, sind zusätzliche Stabilisatoren in der Regel nicht nötig.

Im übrigen kann das Ausgangsgemisch zusätzlich auch Keimbildner enthalten, welche bei der Ausbildung der Zellstruktur als Keime für die Gasblasen wirken, wodurch die Ausbildung einer gleichmässigen, homogene Verteilung der Zellen unterstützt wird. Die Keimbildner können feinteilige Feststoffe in Form eines Inertstoffes (inert particles) sein. Die Inertstoffe können bsp. poröse Teilchen sein, welche das freigesetzte Gas der Treibmittel vor der Ausbildung der eigentlichen Zellen aufnehmen. Geeignete Inertstoffe können feine Kieselsäuren, Silikate oder Glaspulver, sein.

Das aus oben genannten Ausgangskomponenten hergestellte Ausgangsgemisch liegt bevorzugt als fliessfähige, insbesondere pastöse Masse, auch PVC-Plastisol genannt, vor.

Ein charakteristisches Ausgangsgemisch besteht aus folgenden Komponenten und Mengenanteilen:

| | | Gew.-% vom Ausgangsgemisch |
|---|---|---|
| (a) | Polyvinylchlorid (PVC) in Pulverform | 35 - 65 |
| (b) | Isocyanat, wie MDI Isocyanat | 15 - 55 |
| (c) | Epoxidiertes pflanzl. Öl, wie epoxidiertes Sojaöl | 1 - 20 |
| (d) | Epoxidharz (z.B. Araldit®) | 0 - 7 |
| (e) | Lösungsmittel, wie Aceton | 0 - 15 |
| (f) | Azo-bis-isobutyronitrile (z.B. Genitron®) | 0.5 - 4 |
| (g) | Azodicarbonamide (z.B. Unifoam AZ) | 1 - 3 |
| (h) | Phthalsäureanhydrid | 2 - 8 |
| (i) | Maleinsäureanhydrid | 0 - 8 |
| (j) | Stabilisator, wie Al-Silikat | 0 - 2 |
| (k) | Füllmaterial, wie Calciumcarbonat | 0 - 8 |

Ein erstes geeignetes Ausgangsgemisch besteht aus folgenden Komponenten:

| | Gew.-% vom Ausgangsgemisch | Gew.-Anteile per 100 Anteile PVC |
|---|---|---|
| (a) Polyvinylchlorid (PVC) in Pulverform | 53.8 | 100 |
| (b) MDI Isocyanat | 24.2 | 45 |
| (c) Epoxidiertes Sojaöl | 6.6 | 12 |
| (d) Epoxidharz (Araldit®) | 1.6 | 3 |
| (e) Aceton | 4.3 | 8 |
| (f) Azo-bis-isobutyronitrile (Genitron®) | 2.4 | 4.5 |
| (g) Azodicarbonamide (Unifoam AZ) | 1.2 | 2.25 |
| (h) Phthalsäureanhydrid | 5.9 | 11 |

Ein zweites geeignetes Ausgangsgemisch besteht aus folgenden Komponenten:

| | | Gew.-% vom Ausgangsgemisch | Gew.-Anteile per 100 Anteile PVC |
|---|---|---|---|
| (a) | Polyvinylchlorid (PVC) in Pulverform | 53.8 | 100 |
| (b) | MDI Isocyanat | 24.2 | 45 |
| (c) | Epoxidiertes Sojaöl | 6.6 | 12 |
| (d) | Epoxidharz (Araldit®) | 1.6 | 3 |
| (e) | Aceton | 4.3 | 8 |
| (f) | Azo-bis-isobutyronitrile (Genitron®) | 2.4 | 4.5 |
| (g) | Azodicarbonamide (Unifoam AZ) | 1.2 | 2.25 |
| (h) | Phthalsäureanhydrid | 3.8 | 7 |
| (i) | Maleinsäureanhydrid | 2.1 | 4 |

Bei der Herstellung des Ausgangsgemischs werden bevorzugt zuerst die Flüssigkomponenten (b), (c), (d) und (e) vorgelegt und dann, vorzugsweise unter Rühren, die Feststoffe (f), (g), (h) und gegebenenfalls (i) miteinander vermischt. Danach wird das PVC-Pulver (a) beigemischt.

Zur Herstellung eines PVC-Hartschaumes wird das fliessfähige Ausgangsgemisch in eine Pressvorrichtung, vorzugsweise in die Kavität einer abgedichteten, d.h. gasdichten, Pressform gefüllt. Die Pressform kann bsp. ein Tauchkantenwerkzeug sein. Das Ausgangsgemisch wird bei einem Druck von 5-500 bar, insbesondere von 100-300 bar auf eine Temperatur von bsp. 150-200°C, insbesondere von 160-190°C. erwärmt. Bereits bei einer Temperatur ab 70°C beginnen sich die chemischen Treibmittel unter Gasbildung (Stickstoff) zu zersetzen, während bei einer Temperatur ab rund 150°C durch Gelierung des PVC die Kunststoffmasse unter gleichzeitiger Zunahme der Viskosität von einem fliessfähigen in einen festen Zustand überführt wird.

Der hohe Druck von rund 150 bar wird durch die Zersetzung des Treibmittels erzeugt. Damit das noch fliessfähige Ausgangsgemisch jedoch nicht bereits in der Pressform vollständig expandiert muss dieser Druck im wesentlichen bis zur Abkühlung und Verfestigung des Ausgangsgemisches zu einem gummi-elastischen Formling aufrechterhalten werden.

Durch die Zersetzung des Treibmittels unter Druck werden kleinste Initial-Bläschen ausgebildet, in welchen das freigesetzte Gas gefangen bleibt. Der hohe Druck unterdrückt jedoch ein vorzeitiges Expandieren der Bläschen im noch nicht verfestigten Ausgangsmaterial. In diesem Verfahrensstadium findet jedoch noch keine bedeutende chemische Vernetzungsreaktion zwischen den einzelnen Komponenten statt.

In einem nachfolgenden Schritt wird die Kunststoffmasse abgekühlt und zu einem blockförmigen, gummi-elastischen Formling verfestigt. Bei Erreichen einer genügenden Verfestigung des Formlings kann der Druck bis Erreichen des atmosphärischen Druckes stetig abgebaut werden.

In einer spezifischen Ausführung des Verfahrens kann durch Ausüben eines definierten Öffnungshubes während des Druckabbaus, eine kurzeitige Druckentlastung vorgenommen, welche in der noch nicht vollständig verfestigten Kunststoffmasse die Ausbildung von gleichmässig verteilten Bläschen bewirkt, ohne dass jedoch die Kunststoffmasse wesentliche expandiert. Die durch diesen Verfahrensschritt forcierte gleichmässige Initial-Bläschenbildung ist die Basis zur Herstellung eines Schaumstoffkörpers mit einer gleichmässigen, feinen Zellstruktur.

Bei genügender Verfestigung des Formlings und abgeschlossenem Druckabbau und Abkühlung wird der Formling aus dem Presswerkzeug entformt. Dieser liegt nun als flächiger oder blockförmiger biegsamer Körper mit gummi-elastischen Eigenschaften vor, welche vom unvernetzten Zustand der Kunststoffmatrix herrühren.

In einem nächsten Verfahrensschritt wird der Formling durch Zufuhr von Wärme und H₂O mittel Vernetzungsreaktion und gleichzeitiger Expansion in einen vernetzten PVC-Hartschaumstoff überführt. Das H₂O kann in flüssigem und/oder dampfförmigem Zustand zugeführt werden. Es wird bevorzugt in erhitztem Zustand von bsp. 70-100°C, insbesondere von 95-100°C, zugeführt. Der Expansionsschritt wird bevorzugt in einem Expansionsofen ausgeführt, in welchem das H₂O zur Auslösung der Vernetzungsreaktion in Form von Wasserdampf zugeführt wird.

Der Formling kann jedoch zwecks Expansion und Aushärtung auch in ein Wasserbad mit einer Wassertemperatur von bsp. über 70°C geführt werden. In spezifischer Ausführung der Erfindung wird hier dem Wasser zwecks Anwendung höherer Prozesstemperaturen Glykol beigeben.

Durch die Zufuhr von H₂O wird wie oben erwähnt der Vernetzungsvorgang ausgelöst, wobei in einer ersten Reaktion H₂O mit den Isocyanat-Gruppen unter Ausbildung von Aminen und freiem CO₂ reagiert:

R-NCO+H₂O → RNH₂+CO₂

Das freigesetzte CO₂ wirkt dabei als zusätzliches Treibmittel.

Unter dem Einfluss der Hitze im Expansionsofen, welche zur Erweichung des Formlings führt, setzen die in den Initialbläschen gefangenen Gase zusammen mit dem durch die oben genannte Reaktion freigesetzten CO₂ die Expansion des Formlings zu einem Schaumstoffkörper in Gang. Das CO₂ ist dabei das primäre Treibmittel, welches wesentlich zur Expansion beiträgt, während das chemische Treibmittel hinsichtlich der Ausbildung der Intial-Bläschen von entscheidender Bedeutung ist. Von diesen Initial-Bläschen geht nämlich beim Expansionsvorgang das Zellwachstum aus. Die Initial-Bläschen sind daher entscheidend hinsichtlich der Anzahl, Grösse und Verteilung der Zellen im expandierten Schaumstoffkörper.

Die Amine bilden ihrerseits in weiteren chemischen Reaktionen mit den Anhydriden, bzw. der aus ihnen gebildeten Säuren, vernetzende Amid-Brücken aus.

Während dieses Vorganges reagieren die epoxidierten Verbindungen zusammen mit dem Isocyanat in das Netzwerk ein, wobei durch den Einsatz epoxiderter Verbindungen längere Molekülketten gebildet werden, wodurch der Vernetzungsgrad auf tieferem Niveau gehalten werden kann. Dadurch erhöht sich die Schlagzähigkeit des Schaumstoffes und die Sprödigkeit nimmt ab, ohne dass der Schaumstoff bedeutend an Druckfestigkeit und Steifigkeit einbüsst.

Die Expansion des Formlings kann überdies unter Atmosphärendruck oder unter Druckverhältnissen in der Nähe des atmosphärischen Druckes geschehen.

Der Formling kann ferner im Expansionsofen frei expandieren oder, zwecks geführter Expansion, in ein Formwerkzeug, bsp. in einen Formrahmen mit definierten Dimensionen des Endproduktes eingespannt sein.

In einem abschliessenden Schritt kann der expandierte Schaumstoffkörper in einem Temperofen bei erhöhter Temperatur getempert werden. Hierbei werden die Kernpartien des Schaumstoffkörpers weiter vernetzt. Während des Tempervorganges kann überdies Wasser oder Wasserdampf zugeführt werden.

Die erfindungsgemässen PVC-Hartschaumkörper weisen eine im wesentlichen geschlossenzellige Zellstruktur mit einer im wesentlichen gleichmässigen Verteilung der Zellen auf. Die Schubbruchdehung des erfindungsgemässen Schaumstoffes ist bevorzugt 35% oder grösser, insbesondere 40% oder grösser, und besonders vorteilhaft 45% oder grösser.

Das Verfahren wird vorzugsweise so ausgeführt, dass die Bläschen bzw. Zellen isotrop ausgebildet sind, so dass der Schaumstoffkörper isotrope mechanische und physikalische Eigenschaften aufweist. Es ist jedoch auch möglich, dass die Expansion des Formlings in eine bevorzugte Richtung gelenkt erfolgt, so dass anisotrope Zellen ausgebildet werden, welche dem Schaumfstoffkörper anisotrope mechanische und physikalische Eigenschaften verleihen.

Das beschriebene diskontinuierliche, dreistufige Verfahren und die zur Durchführung des Verfahrens eingesetzte Vorrichtung ermöglichen die Herstellung von massiven, grossformatigen erfindungsgemässen Schaumstoffkörpern. Im Gegensatz zu anderen PVC-Schaumstoffkörpern mit vergleichbaren mechanischen Eigenschaften können die erfindungsgemässen PVC-Schaumstoffkörper dank der speziellen Ausgangsmischung mit epoxidierten Verbindungen gemäss dem bekannten dreistufigen, diskontinuierlichen Verfahren, wie vorgängig beschrieben, hergestellt werden. Zusätzliche Entwicklungskosten zur Implementierung eines neuen Verfahrens mit entsprechend neuen Produktionsanlagen zur Verarbeitung der erfindungsgemässen Ausgangsmischung entfallen weitestgehend.

Die ausgehärteten und expandierten PVC-Hartschaumstoffkörper liegen bevorzugt als platten- oder blockförmige Körper vor und weisen beispielsweise Längen- und Breitenabmessungen von 50-500 cm, vorzugsweise von 100-300 cm sowie Höhen- bzw. Dickenabmessungen von rund 1-100 cm, vorzugsweise 3-50 cm auf. Ein typischer PVC-Hartschaumkörper weist eine Abmessung von 120 x 240 x 20 cm (Breite x Länge x Höhe) auf.

Die ausgehärteten und expandierten PVC-Hartschaumstoffkörper können beispielsweise als Leichtschaumstoffe mit einer Rohdichte von 30 - 200 kg/m³ oder als Schwerschaumstoffe mit einer Rohdichte von über 200 kg/m³ hergestellt werden.

Bei einer Rohdichte von 130 kg/m³ oder mehr wird kein oder nur geringfügig Lösungsmittel gemäss Stand der Technik beigefügt. Zum Erreichen von Rohdichten von weniger als 130 kg/m³ wird bevorzugt Lösungsmittel zugegeben.

Die fertigen und vorzugweise als platten- oder blockförmige Materialien vorliegenden Schaumfstoffkörper werden in nachfolgenden Verarbeitungsschritten bevorzugt zu Plattenmaterial in definierter Grösse zugeschnitten, welches sich wiederum zu Verbundlaminaten weiter verarbeiten lässt. Das Material lässt sich ferner präzise bohren, sägen, hobeln und (unter Hitzeeinwirkung) umformen.

Die erfindungsgemässen Schaumstoffkörper finden insbesondere Anwendung im Fahrzeugbau, wie Schienen- oder Strassenfahrzeugbau, in Windkraftanlagen und Flugzeugbau. Dank ihrer niedrigen Rohdichte finden die Schaumstoffkörper auch Verwendung im Schiffsbau. Ferner finden die erfindungsgemässen Schaumstoffkörper Anwendung in Artikeln des Freizeit- bzw. Sportbereichs, oder in Artikeln für Konstruktions- oder Bauzwecke.

Spezifische Anwendungen können sein: Fussböden in Fahrzeugen, Booten, Flugzeugen; Rotorblätter von Windkraftanlagen; Wärme- und/oder Schallisolationselemente; Rümpfe, Decks und Aufbauten im Boots- bzw. Marinebau; Flügel und Trennwände von Flugzeugen; selbsttragende Karosserieteile; Tiefseetanks; Minenräumfahrzeuge; Skis und Surfbretter.

Die nach dem erfindungsgemässen Verfahren hergestellten quaderförmigen Schaumstoffkörper werden hierzu bevorzugt zu Schaumstoffplatten zugeschnitten und den weiteren Verwendungen bzw. Verarbeitungsschritten zugeführt. Die Schaumstoffplatten können z.B. ein- oder beidseitig mit einer oder mehreren Schichten laminiert werden und so Schichten von Verbundmaterialien ausbilden. Besonders bevorzugt bilden die Schaumstoffplatten Kernschichten von Sandwich-Verbundelementen aus. Die Deckschichten können aus Metall, wie Aluminium, oder aus Kunststoffplatten, insbesondere aus faserverstärkten Kunststoffplatten sein.

Im folgenden wird die Erfindung beispielhaft und mit Bezug auf die beiliegenden Zeichnungen näher erläutert. Es zeigen:

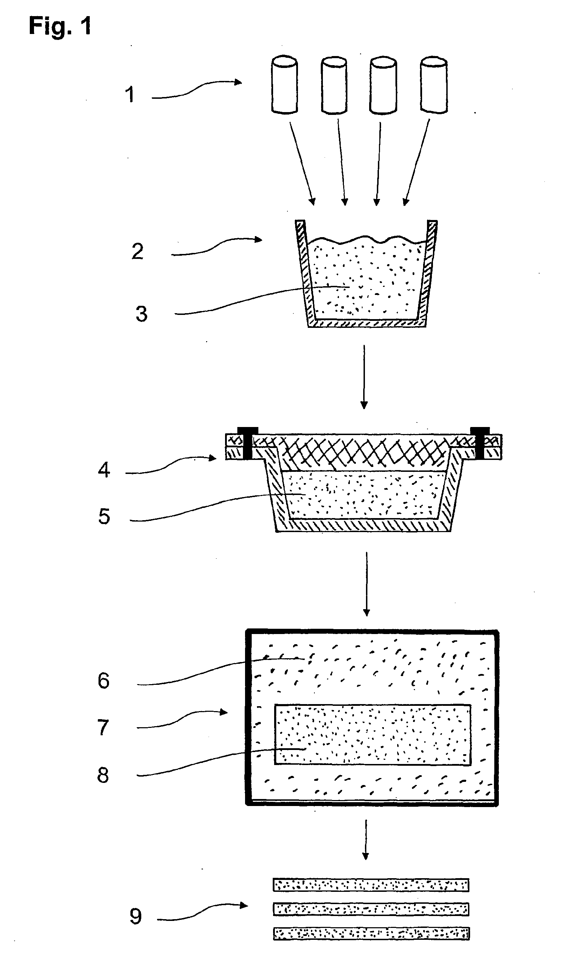

- Fig. 1:: den schematischen Ablauf eines 3-stufigen, diskontinuierlichen Verfah- rens zur Herstellung eines erfindungsgemässen PVC-Schaumstoffkör- pers;
- Fig. 2a-c:: mechanische Eigenschaften verschiedener, geschlossenzelliger PVC Schaumstoffe im Vergleich;
- Fig. 3a-c:: mechanische Eigenschaften verschiedener, geschlossenzelliger PVC Schaumstoffe im Vergleich;
- Fig. 4:: die Druckfestigkeit verschiedener, geschlossenzelliger PVC Schaumstof- fe im Vergleich;
- Fig. 5:: Sandwichplatten mit verschiedenen Schaumstoffkernen nach einem Fallbolzenversuch.

In einer Mischvorrichtung 2 wird aus mehreren Ausgangskomponenten 1 eine erfindungsgemässe Ausgangsmischung 3 hergestellt. Die Ausgangsmischung 3 wird in einer Pressform 4 zu einem Formling 5 umgewandelt. Der Formling ist vorzugsweise von flächiger bis blockartiger Form. Der verfestigte Formling 5 wird entformt und in einer Expansionsvorrichtung 7 durch Zugabe von erwärmtem Wasser und/oder Wasserdampf 6 unter Expansion zu einem vernetzen PVC-Hartschaumkörper 8 ausgehärtet. Der PVC-Hartschaumkörper ist vorzugsweise von platten- bis blockförmiger Gestalt. Der PVC-Hartschaumkörper kann gegebenenfalls in einem Temperofen bei erhöhter Temperatur getempert, d.h. vollständig ausgehärtet werden (nicht gezeigt). Der vollständig ausgehärtete Hartschaumkörper kann nachfolgend weiterverarbeitet werden und bsp. zu Schaumstoffplatten 9 geschnitten werden.

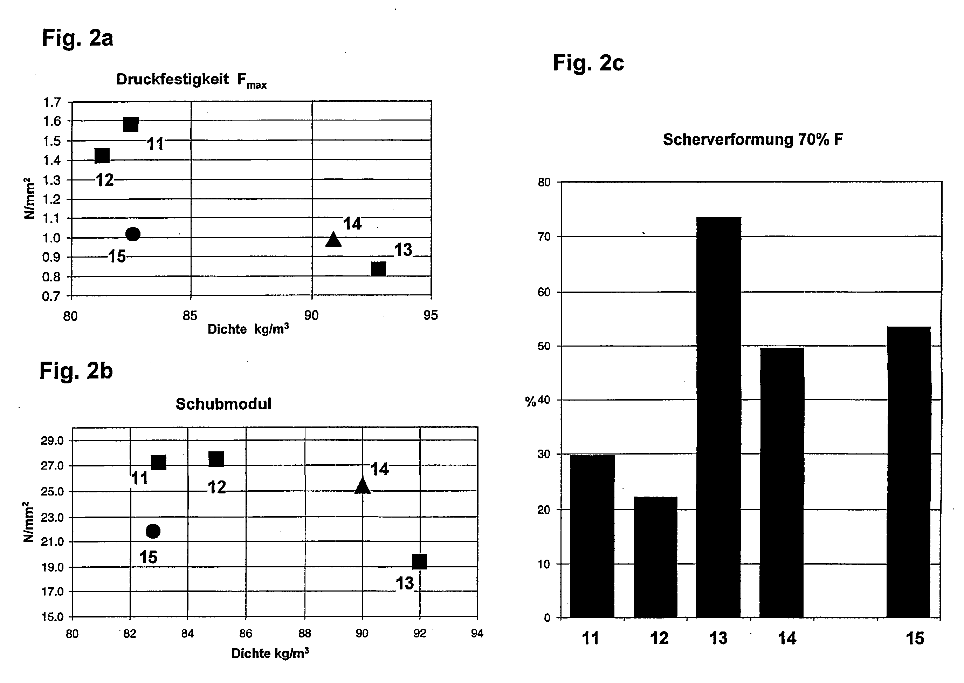

Fig. 2a bis 2c zeigen mechanische Eigenschaften verschiedener geschlossenzelliger Schaumstoffe im gegenseitigen Vergleich, wobei 11 ein C71.75 Schaumstoff (vernetzter PVC Hartschaumstoff), 12 ein C70.75 Schaumstoff (vernetzter PVC Hartschaumstoff), 13 ein R63.80 Schaumstoff (linearer PVC Schaumstoff), 14 ein CoreCell A500 Schaumstoff (linearer Polymer-Schaumstoff) und 15 ein erfindungsgemässer PVC-Hartschaumstoff ist.

Die in Fig. 2a gezeigte Druckfestigkeit Fₘₐₓ des erfindungsgemässen PVC-Hartschaumstoffs 15 mit einer Rohdichte von rund 83 kg/m³ liegt zwar unterhalb der Druckfestigkeit bekannter PVC-Hartschaumstoffe 11, 12 mit ähnlicher Rohdichte, jedoch über oder im Bereich der Druckfestigkeit linearer Schaumstoffe 13, 14 mit einer höheren Rohdichte als 90 kg/m³ .

Gemäss Fig. 2b liegt das Schubmodul des erfindungsgemässen PVC-Hartschaumstoffs 15 zwar unterhalb desjenigen bekannter PVC-Hartschaumstoffe 11, 12 ist jedoch im Vergleich zu linearen Schaumstoffen 13, 14 mit wesentlich höheren Rohdichten recht hoch.

Ferner zeigt der erfindungsgemässe PVC-Hartschaumstoff 15 gemäss Fig. 2c eine vergleichsweise hohe Schubbruchdehnung gegenüber vernetzten PVC-Hartschaumstoffen 11, 12.

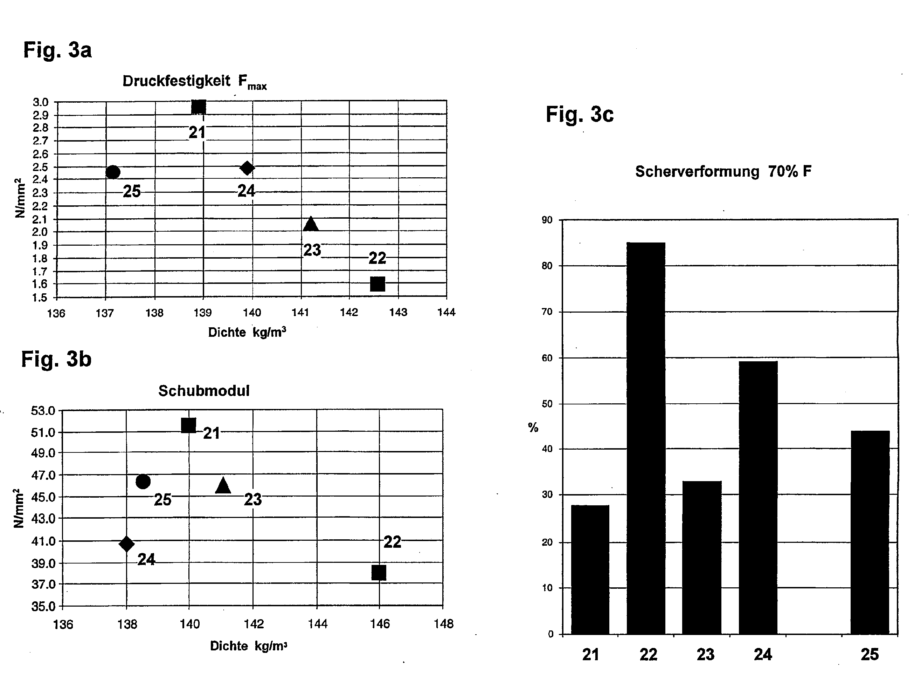

Fig. 3a bis 3c zeigen mechanische Eigenschaften verschiedener geschlossenzelliger Schaumstoffe im gegenseitigen Vergleich, wobei 21 ein C70.130 Schaumstoff (vernetzter PVC-Hartschaumstoff), 22 ein R63.140 Schaumstoff (linearer PVC Schaumstoff), 23 ein CoreCell A800 Schaumstoff (linearer Polymer-Schaumstoff), 24 ein Divinycell HD130 Schaumstoff (vernetzter PVC Hartschaumstoff) und 25 ein erfindungsgemässer PVC-Hartschaumstoff ist.

Die in Fig. 3a gezeigte Druckfestigkeit Fₘₐₓ des erfindungsgemässen PVC-Hartschaumstoffs 25 mit einer Rohdichte von rund 137 kg/m³ liegt über oder im Bereich der Druckfestigkeit der Schaumstoffe 22, 23 und 24 mit einer höheren Rohdichte.

Gemäss Fig. 3b liegt der Schubmodul des erfindungsgemässen PVC-Hartschaumstoffs im Vergleich zu linearen Hartschaumstoffen recht hoch.

Ferner zeigen gemäss Fig. 3c PVC Schaumstoffe 22, 24 mit vergleichsweise geringem Schubmodul eine hohe Schubbruchdehnung, während PVC-Schaumstoffe 21, 23 mit vergleichsweise hohem Schubmodul eine geringe Schubbruchdehung aufweisen. Der erfindungsgemässe PVC-Hartschaumstoff 25 weist hingegen sowohl einen vergleichsweise hohen Schubmodul wie auch eine vergleichsweise hohe Schubbruchdehnung auf.

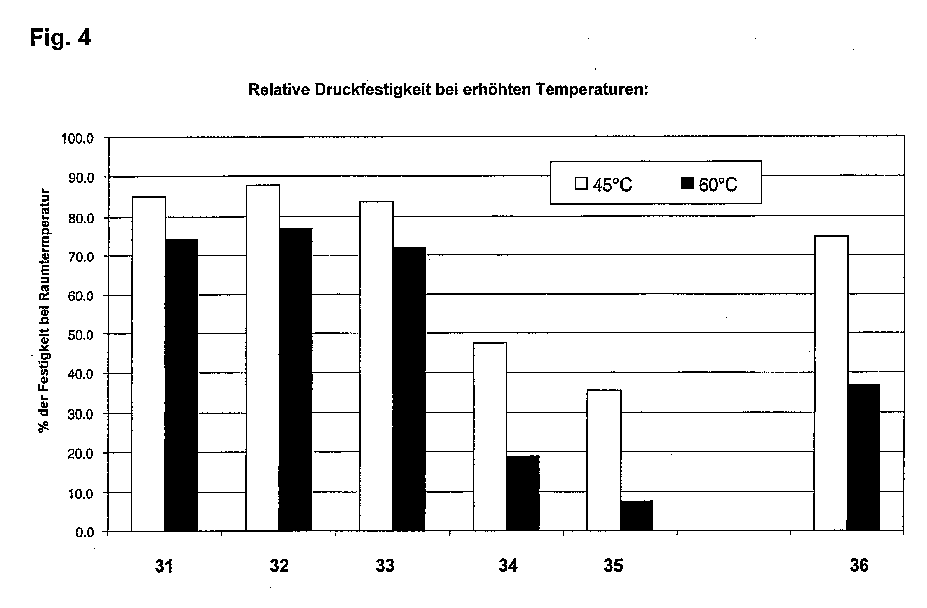

Fig. 4 zeigt die relative Druckfestigkeit verschiedener geschlossenzelliger Schaumstoffe bei 45°C und 60°C im gegenseitigen Vergleich, wobei 31 ein C70.55 Schaumstoff (vernetzter PVC Hartschaumstoff), 32 ein C71.75 Schaumstoff (vernetzter PVC Hartschaumstoff), 33 ein CoreCell A500 Schaumstoff (linearer Polymer-Schaumstoff), 34 ein Divinycell HD130 Schaumstoff (vernetzter PVC Hartschaumstoff), 35 ein R63.80 Schaumstoff (linearer PVC Schaumstoff) und 36 ein erfindungsgemässer PVC-Hartschaumstoff ist. Der erfindungsgemässe Schaumstoff weist gegenüber den PVC-Hartschaumstoffen 34, 35 eine vergleichsweise hohe relative Druckfestigkeit bei erhöhter Temperatur auf.

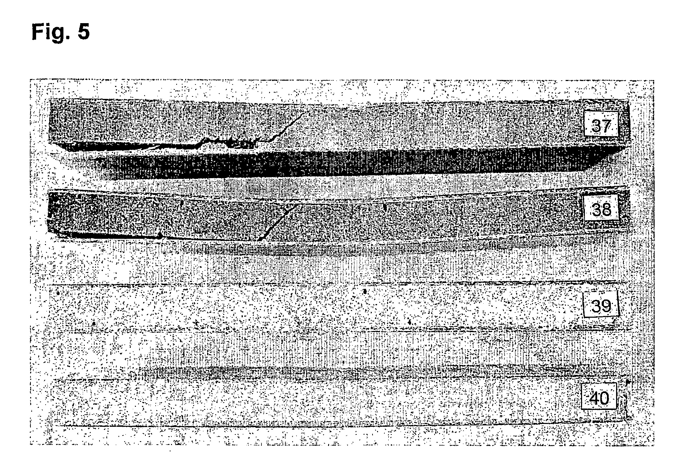

Fig. 5 zeigt eine Abbildung von Sandwichplatten, nach einem erfolgten Fallbolzenversuch. Bei diesem Versuch werden 20 mm dicke Schaumstoffmuster beidseitig mittels glasfaserverstärkten Polyester laminiert und nach Aushärtung zugeschnitten und ins Fallprüfgerät gelegt. Die Masse der Prüfmuster sind 295 x 80 mm. Die Auflagedistanz ist 210 mm. Der Fallbolzen weist eine halbkugelförmige Stirnseite mit einem Kugelradius von 35 mm auf. Das Fallbolzengewicht beträgt 5'945 g und die Fallhöhe ist 150 cm.

Die Abbildung zeigt den Vergleich von 37 ein C70.75 Schaumstoff (vernetzter PVC-Hartschaumstoff), 38 ein C70.90 Schaumstoff (vernetzter PVC-Hartschaumstoff), 39 ein R63.80 Schaumstoff (linearer PVC-Schaumstoff) und 40 ein erfindungsgemässer PVC-Hartschaumstoff.

Mit diesem Praxistest kann die Schadenstoleranz eines Schaumstoffes auf eindrückliche Weise demonstriert werden. Erfahrungsgemäss wird der Test mit jenen Schaumstoffen bestanden, welche eine Schubbruchdehnung von mindestens 40 % aufweisen.

Der erfindungsgemässe Schaumstoff 40 zeigt im Fallbolzentest wie der lineare PVC-Schaumstoff 39 keine nennenswerte Beschädigung der Deckschichten, keine Delaminationsanzeichen und keinerlei Beschädigung des Schaumstoffes. Die härteren aber spröderen vernetzten PVC-Hartschaumstoffe 37 und 38 zeigen aber das für diesen Schaumstofftyp typische Schadensbild mit dem durchgängigen Kernriss (Schubversagen im Kern) und der teilweisen Delamination von der unteren Deckschicht.

## Patentansprüche

1. Verfahren zur Herstellung eines vernetzten PVC-Hartschaumkörpers, aus einem Ausgangsgemisch enthaltend PVC, ein Isocyanat oder Polyisocyanat, ein organisches Anhydrid und ein chemisches Treibmittel, durch Umwandlung des Ausgangsgemisches unter Druck- und Wärmeeinwirkung in einer Pressvorrichtung zu einem Formling, Entformen und Expandieren und Aushärten des erhaltenen Formlings in einer Expansionsvorrichtung unter Zufuhr von Wärme und Wasser und/oder Wasserdampf zu einem vernetzten PVC-Schaumkörper,
**dadurch gekennzeichnet, dass**
das Ausgangsgemisch epoxidierte Verbindungen in Mengenanteilen von mehr als 3 Gew.-% bezogen auf das Ausgangsgemisch enthält.

2. Verfahren nach Anspruch 1, wobei das Ausgangsgemisch epoxidierte Verbindungen in Mengenanteilen von mehr als 5 Gew.-%, vorzugsweise von mehr als 6 Gew.-% und weniger als 20 Gew.-%, vorzugsweise weniger als 15 Gew.-%, insbesondere weniger als 11 Gew.-%, bezogen auf das Ausgangsgemisch enthält.

3. Verfahren nach einem der Ansprüche 1 bis 2, wobei die epoxidierten Verbindungen epoxidierte Öle, insbesondere epoxidiertes Sojabohnenöl, beinhalten oder daraus sind.

4. Verfahren nach einem der Ansprüche 1 bis 3, wobei die epoxidierten Verbindungen Epoxidharze beinhalten oder daraus sind.

5. Verfahren nach einem der Ansprüche 1 bis 4, wobei die epoxidierten Verbindungen sowohl epoxidierte Öle, insbesondere epoxidiertes Sojabohnenöl, als auch Epoxidharze beinhalten oder daraus sind.

6. Verfahren nach einem der Ansprüche 1 bis 5, wobei der PVC-Hartschaumstoffkörper in einem wenigstens dreistufigen Prozess hergestellt wird, umfassend die Prozessschritte:
(a) Herstellung eines Ausgangsgemisches aus wenigstens drei Ausgangskomponenten;
(b) Umwandlung des Ausgangsgemischs in einen Formling durch Gelierung des PVC unter Einfluss von Wärme und Druck in einer Pressform;
(c) Expansion und Aushärtung des Formlings zu einem vernetzten PVC-Hartschaumstoffkörper unter Einfluss von Wärme und Wasser und/oder Wasserdampf in einer Expansionsvorrichtung.

7. Verfahren nach Anspruch 6, wobei im Prozessschritt (b) durch temperaturbedingtes Zersetzen des chemischen Treibmittels, insbesondere eines azotierten Treibmittels, Initial-Bläschen in gleichmässiger Verteilung ausgebildet werden.

8. Vernetzter PVC-Hartschaumkörper, hergestellt aus einem Ausgangsgemisch enthaltend PVC, ein Isocyanat oder Polyisocyanat, ein organisches Anhydrid und ein azotiertes Treibmittel sowie epoxidierte Verbindungen in Mengenanteilen von mehr als 3 Gew.-%.

9. Verwendung eines vernetzten PVC-Hartschaumkörpers nach Anspruch 1 und 8 zur Herstellung struktureller Komponenten im Fahrzeug-, Flugzeug-, Boots- oder Marinebau.

## Claims

1. Process for the production of a cross linked PVC-body of rigid foam of a starting mixture containing PVC, a isocyanate or polyisocyanate, an organic anhydride and a chemical propellant, by conversion of the starting mixture under pressure and heat in a pressure device to a body, demoulding and expanding and hardening said body obtained in a expansion device under the influence of heat and water steam to a cross linked PVC-foam-body
**characterised in that**
the starting mixture contains epoxidised compounds in amounts of more than 3 % per weight in relation to the starting compound.

2. Process according to claim 1, whereby the starting mixture contains epoxidised compounds in amounts of more than 5 % per weight preferably of more than 6 % per weight and less than 20 % per weight, more preferably less than 15 % per weight, in particular less than 11 % per weight, in relation to the starting mixture.

3. Process according to one of the claims 1 to 2, whereby the epoxidised compounds contain or consist of epoxidised oils, particularly epoxidised soybean oil.

4. Process according to one of the claims 1 to 3, whereby the epoxidised compounds contain or consist of epoxid resins.

5. Process according to one of the claims 1 to 4, whereby the epoxidised compounds contain or consist of epoxidised oils, in particular epoxidised soybean oil, as well as epoxid resins.

6. Process according to one of the claims 1 to 5, whereby the PVC-body of rigid foam body is manufactured in a process having at least three steps:
(a) producing a starting mixture of at least three starting components;
(b) conversion of the starting mixture to a body by gelification of the PVC under influence of heat and pressure in a pressure mold;
(c) expansion and hardening of the body to a cross linked PVC-body of rigid foam under influence of heat and water and/or water steam in an expansion device.

7. Process according to claim 6, whereby in step (b) by thermal disintegration of the chemical propellant in particular of an azo-containing propellant, initial bubbles in an even distribution are formed.

8. Cross linked PVC-body of rigid foam, manufactured by a starting mixture containing PVC, an isocyanate or polyisocyanate, an anorganic anhydride and an azo-containing propellant as well as epoxidised compounds in amounts of more than 3 % per weight.

9. Use of a cross linked PVC-body of rigid foam according to claims 1 and 8 for manufacturing structural components in vehicle-, airplane-, boat- or marine-constructions.

## Revendications

1. Procédé pour la préparation d'un corps de mousse rigide de PVC réticulé à partir d'un mélange de départ contenant du PVC, un isocyanate ou un polyisocyanate, un anhydride organique et un agent moussant chimique, par transformation du mélange de départ sous l'action de la pression et de la chaleur dans un dispositif de compression en une ébauche, par démoulage et expansion et durcissement de l'ébauche obtenue dans un dispositif d'expansion avec l'introduction de chaleur et d'eau/et de vapeur d'eau en un corps de mousse de PVC réticulé,
**caractérisé en ce que**
le mélange de départ contient des composés époxydés dans des parts de quantité supérieures à 3 % en poids rapporté au mélange de départ.

2. Procédé selon la revendication 1, dans lequel le mélange de départ contient des composés époxydés dans des parts de quantité supérieures à 5 % en poids, de préférence supérieures à 6 % en poids et inférieures à 20 % en poids, de préférence inférieures à 15 % en poids, en particulier inférieures à 11 % en poids, rapporté au mélange de départ.

3. Procédé selon l'une quelconque des revendications 1 à 2, dans lequel les composés époxydés contiennent des huiles époxydées, en particulier de l'huile de soja époxydée ou sont constitués de celles-ci.

4. Procédé selon l'une quelconque des revendications 1 à 3, dans lequel les composés époxydés contiennent des résines époxyde ou sont constitués de celles-ci.

5. Procédé selon l'une quelconque des revendications 1 à 4, dans lequel les composés époxydés contiennent aussi bien des huiles époxydées, en particulier de l'huile de soja époxydée, que des résines époxyde ou sont constitués de celles-ci.

6. Procédé selon l'une quelconque des revendications 1 à 5, dans lequel le corps de mousse rigide de PVC est préparé dans un procédé ayant au moins trois étapes comprenant les étapes de procédé :
(a) de préparation d'un mélange de départ constitué d'au moins trois constituants de départ ;
(b) de transformation du mélange de départ en une ébauche par gélification du PVC sous l'action de la chaleur et de la pression dans un moule de compression ;
(c) d'expansion et de durcissement de l'ébauche en un corps de mousse rigide de PVC réticulé sous l'action de la chaleur et de l'eau et/ou de la vapeur d'eau dans un dispositif d'expansion.

7. Procédé selon la revendication 6, dans lequel de petites bulles initiales sont formées dans une distribution régulière dans l'étape de procédé (b) par la décomposition conditionnée par la température de l'agent moussant chimique, en particulier d'un agent moussant azoté.

8. Corps de mousse rigide de PVC réticulé, préparé à partir d'un mélange de départ contenant du PVC, un isocyanate ou un polyisocyanate, un anhydride organique et un agent moussant azoté ainsi que des composés époxydés dans des parts de quantité supérieures à 3 % en poids.

9. Utilisation d'un corps de mousse rigide de PVC réticulé selon la revendication 1 et 8 pour la préparation de constituants structurels dans la construction de véhicules automobiles, d'avions, de navires ou de la marine militaire.
